# EUROPÄISCHE PATENTSCHRIFT

(11) **EP 2 724 797 B1**
(45) Veröffentlichungstag und Bekanntmachung des Hinweises auf die Patenterteilung: **31.07.2019**
(21) Anmeldenummer: 12190087.2
(22) Anmeldetag: 26.10.2012
(51) Int. Cl.: B21D 37/14, B23Q 3/155

(54) **Werkzeugmagazin für Werkzeuge einer Werkzeugmaschine, maschinelle Anordnung mit einem derartigen Werkzeugmagazin sowie Verfahren zum Verwalten von Werkzeugen an einer derartigen maschinellen Anordnung**
Tool holder for tools of a machine tool, machine assembly with such a tool holder and method for managing tools with such a mechanical assembly
Magasin d'outils pour outils d'une machine-outil, agencement mécanique avec un tel magasin d'outils et procédé de gestion d'outils sur un agencement mécanique de ce type

(43) Veröffentlichungstag der Anmeldung: 30.04.2014
(73) Patentinhaber: TRUMPF Werkzeugmaschinen GmbH + Co. KG, 71254 Ditzingen (DE)
(72) Erfinder: Klinkhammer, Marc, 71254 Ditzingen (DE); Kerscher, Stefan, 75045 Walzbachtal (DE)
(74) Vertreter: Kohler Schmid Möbus Patentanwälte

(56) Entgegenhaltungen:
- EP-A1- 0 648 556
- DE-U1- 8 716 086
- JP-A- 56 163 856
- JP-A- 61 050 743
- US-A- 4 620 363

## Beschreibung

Die Erfindung betrifft ein Werkzeugmagazin für Werkzeuge einer Werkzeugmaschine zum Bearbeiten von Werkstücken, insbesondere von Blechen, mit einer stationsnahen Magazineinheit, mit einer stationsfernen Magazineinheit sowie mit einer Werkzeughandlingvorrichtung,
- wobei die stationsnahe Magazineinheit für Werkzeuge vorgesehen ist, die aus der stationsnahen Magazineinheit in eine Bearbeitungsstation der Werkzeugmaschine eingewechselt und/oder aus der Bearbeitungsstation der Werkzeugmaschine in die stationsnahe Magazineinheit ausgewechselt werden und
- wobei die stationsferne Magazineinheit für Werkzeuge vorgesehen ist, die zum späteren Einwechseln in die Bearbeitungsstation von der stationsfernen Magazineinheit zu der stationsnahen Magazineinheit transferiert werden und/oder die nach dem Auswechseln aus der Bearbeitungsstation von der stationsnahen Magazineinheit zu der stationsfernen Magazineinheit transferiert werden.

Ein derartiges Werkzeugmagazin ist z.B. aus der DE 87 16 086 U1 bekannt.

Die Erfindung betrifft des Weiteren eine maschinelle Anordnung zum Bearbeiten von Werkstücken, insbesondere von Blechen, mit einer Werkzeugmaschine, die eine Bearbeitungsstation aufweist, an welcher Werkzeuge für die Werkstückbearbeitung, insbesondere für die Blechbearbeitung, ein- und auswechselbar sind sowie mit einem Werkzeugmagazin. Schließlich betrifft die Erfindung ein Verfahren zum Verwalten von Werkzeugen für die Werkstückbearbeitung, insbesondere für die Blechbearbeitung, an einer maschinellen Anordnung der genannten Art.

Gattungsgemäßer Stand der Technik ist bekannt aus EP 0 648 556 A1. Diese Druckschrift offenbart eine Revolverstanzpresse für die Blechbearbeitung mit einem O-förmigen Maschinengestell. In dem Gestellinnenraum sind eine Koordinatenführung für die zu bearbeitenden Bleche sowie ein Werkzeugrevolver als stationsnahe Magazineinheit eines Werkzeugmagazins untergebracht. Der Werkzeugrevolver ist um eine vertikale Achse drehbar und entlang seines Umfanges mit einer Mehrzahl von Lagerplätzen für Stanzwerkzeuge versehen. Durch eine Zustellbewegung des Werkzeugrevolvers um die vertikale Drehachse wird das für die auszuführende Werkstückbearbeitung benötigte Stanzwerkzeug an einer Bearbeitungsstation der Revolverstanzpresse positioniert. Die Lagerplätze des Werkzeugrevolvers werden von einer Werkzeugtransfervorrichtung mit den Stanzwerkzeugen für die anstehende Werkstückbearbeitung bestückt. Nicht mehr benötigte Stanzwerkzeuge werden von der Werkzeugtransfervorrichtung aus dem Werkzeugrevolver entnommen, benötigte Stanzwerkzeuge werden von der Werkzeugtransfervorrichtung an den Werkzeugrevolver übergeben. Dabei fährt die Werkzeugtransfervorrichtung zusätzlich zu dem Werkzeugrevolver eine von diesem beabstandete stationsferne Magazineinheit des Werkzeugmagazins der Revolverstanzpresse an. Die stationsferne Magazineinheit befindet sich in einer zu einer Längsseite des Maschinengestells der Revolverstanzpresse hin offenen Gestellkammer. Die Lagerkapazität der stationsfernen Magazineinheit ist aufgrund der räumlichen Gegebenheiten stark eingeschränkt. Infolge der geringen Anzahl der an der stationsfernen Magazineinheit verfügbaren Lagerplätze muss die stationsferne Magazineinheit häufig nach- oder umgerüstet werden, damit der stationsnahe Werkzeugrevolver aus der stationsfernen Magazineinheit mit den benötigten Stanzwerkzeugen versorgt werden kann.

Gattungsgemäßer Stand der Technik mit einer stationsfernen Magazineinheit, die eine gegenüber dem Stand der Technik nach EP 0 648 556 A1 erweiterte Lagerkapazität besitzt, stammt von der Firma TRUMPF®, 71254 Ditzingen, Deutschland. In diesem Fall ist im Nahbereich einer Stanzmaschine mit einem Monostanzkopf und mit einem als stationsnahe Magazineinheit an einer Querschiene einer Koordinatenführung vorgesehenen Linearmagazin eine unter der Bezeichnung "ToolMaster®" angebotene stationsferne Magazineinheit angeordnet. Die stationsferne Magazineinheit ToolMaster® besitzt einen scheibenförmigen Werkzeugträger, der horizontal ausgerichtet ist und um eine vertikale Drehachse zugestellt werden kann. An seiner Oberseite weist der scheibenförmige Werkzeugträger Lagerplätze für Stanzwerkzeuge auf, die in mehreren konzentrischen Reihen um die Drehachse angeordnet sind. Ein Schwenkarm einer Werkzeugtransfervorrichtung hat auf die Werkzeug-Lagerplätze des scheibenförmigen Werkzeugträgers permanent Zugriff und transferiert die betreffenden Stanzwerkzeuge zwischen dem stationsnahen Linearmagazin der Stanzmaschine und dem scheibenförmigen Werkzeugträger der stationsfernen Magazineinheit ToolMaster®. Insbesondere aufgrund des scheibenförmigen Werkzeugträgers benötigt die stationsferne Magazineinheit ToolMaster® eine verhältnismäßig große Aufstellfläche.

Eine leistungsfähige Versorgung der Bearbeitungsstation einer Werkzeugmaschine mit den benötigten Werkzeugen bei kompakter Bauweise der Gesamtanordnung zu ermöglichen, ist Aufgabe der vorliegenden Erfindung.

Erfindungsgemäß gelöst wird diese Aufgabe durch das Werkzeugmagazin gemäß Patentanspruch 1, die maschinelle Anordnung gemäß Patentanspruch 12 und das Verfahren zum Verwalten von Werkzeugen gemäß Patentanspruch 15.

Im Falle der Erfindung ist ein Werkzeugmagazin mit einer stationsfernen Magazineinheit vorgesehen, die zusätzlich zu einem permanent für eine Werkzeughandlingvorrichtung zugänglichen Werkzeugträger einen für dieselbe Werkzeughandlingvorrichtung temporär zugänglichen Werkzeugträger aufweist. Der temporäre Werkzeugträger bietet die Möglichkeit, die stationsferne Magazineinheit flexibel zu konfigurieren. Die Lagerkapazität des permanenten Werkzeugträgers lässt sich durch den temporären Werkzeugträger bedarfsabhängig erweitern. An der stationsfernen Magazineinheit können folglich Werkzeuge auch in einer verhältnismäßig großen Anzahl vorgehalten werden. Daher können für die Bearbeitungsstation der Werkzeugmaschine die benötigten Werkzeuge auch dann kurzfristig bereitgestellt werden, wenn Bearbeitungsaufgaben mit einem großen Werkzeugbedarf zu erledigen sind. Im Rahmen der Werkzeugverwaltung kann die Werkzeughandlingvorrichtung dabei Werkzeuge wahlweise zwischen der stationsnahen Magazineinheit und dem permanenten Werkzeugträger der stationsfernen Magazineinheit, zwischen der stationsnahen Magazineinheit und dem temporären Werkzeugträger der stationsfernen Magazineinheit oder auch zwischen dem permanenten und dem temporären Werkzeugträger der stationsfernen Magazineinheit transferieren.

In besonders großer Zahl können Werkzeuge für die Bearbeitungsstation der Werkzeugmaschine und/oder an der Bearbeitungsstation ausgewechselte Werkzeuge zwischengelagert werden, wenn eine Mehrzahl von stationsfernen Magazineinheiten mit jeweils wenigstens einem permanenten Werkzeugträger und jeweils wenigstens einem temporären Werkzeugträger vorgesehen ist. In diesem Fall besteht beispielsweise die Möglichkeit, an einander gegenüberliegenden Seiten eines Gestells der Werkzeugmaschine jeweils eine stationsferne Magazineinheit anzuordnen.

Besondere Ausführungsarten des Werkzeugmagazins gemäß Patentanspruch 1, der maschinellen Anordnung gemäß Patentanspruch 12 und des Werkzeugverwaltungsverfahrens gemäß Patentanspruch 15 ergeben sich aus den abhängigen Patentansprüchen 2 bis 11, 13, 14 und 16.

Im Falle der Erfindungsbauart gemäß Patentanspruch 2 umfasst die stationsferne Magazineinheit des Werkzeugmagazins mehrere temporäre Werkzeugträger. Die verschiedenen temporären Werkzeugträger sind wahlweise für die Werkzeughandlingvorrichtung zur Entnahme und/oder zur Übergabe von Werkzeugen zugänglich. Ein derartiges Werkzeugmagazin besitzt eine besonders große Lagerkapazität. Darüber hinaus bietet es die Möglichkeit, den oder die temporären Werkzeugträger, welche der Werkzeughandlingvorrichtung momentan nicht zur Verfügung stehen müssen, um- bzw. nachzurüsten und auf diese Art und Weise die stationsferne Magazineinheit und mit dieser das gesamte Werkzeugmagazin für kommende Bearbeitungsaufgaben vorzubereiten, ohne dass die momentanen Abläufe an der Werkzeugmaschine dadurch gestört oder verzögert würden.

In weiterer vorteilhafter Ausgestaltung der Erfindung ist ausweislich Patentanspruch 3 die Zugänglichkeit des oder der temporären Werkzeugträger für die Werkzeughandlingvorrichtung an eine Funktionsstellung des oder der temporären Werkzeugträger gebunden. In einer Außerfunktionsstellung stehen der oder die temporären Werkzeugträger der Werkzeughandlingvorrichtung nicht zur Verfügung. Die von einem temporären Werkzeugträger auszuführenden Bewegungen in die Funktionsstellung oder in die Außerfunktionsstellung lassen sich auf einfache Art und Weise mit hoher Genauigkeit steuern. In der Außerfunktionsstellung kann der betreffende temporäre Werkzeugträger insbesondere mit Werkzeugen um- bzw. nachgerüstet werden. Auch besteht die Möglichkeit, Werkzeuge, die beispielsweise aufgrund von Verschleiß aus dem Werkzeugbestand des Werkzeugmagazins der Werkzeugmaschine zu entfernen sind, bei Außerfunktionsstellung des betreffenden temporären Werkzeugträgers von diesem zu entnehmen.

Eine kompakte Bauweise der stationsfernen Magazineinheit ist dann möglich, wenn der oder die temporären Werkzeugträger der stationsfernen Magazineinheit aus der Außerfunktionsstellung in die Funktionsstellung und/oder aus der Funktionsstellung in die Außerfunktionsstellung in vertikaler Richtung bewegbar sind (Patentanspruch 4). Da die temporären Werkzeugträger Bewegungen in vertikaler Richtung ausführen, kommt die stationsferne Magazineinheit mit einer verhältnismäßig kleinen Grundfläche aus.

Im Interesse einer hohen Funktionssicherheit des Werkzeugtransfers ist ausweislich Patentanspruch 5 vorgesehen, dass der oder die temporären Werkzeugträger der stationsfernen Magazineinheit in der Funktionsstellung gegenüber dem permanenten Werkzeugträger und/oder gegenüber der Werkzeughandlingvorrichtung definiert angeordnet sind. Aufgrund dieses Erfindungsmerkmales ist sichergestellt, dass die Werkzeughandlingvorrichtung Werkzeuge störungsfrei von dem betreffenden temporären Werkzeugträger der stationsfernen Magazineinheit entnehmen oder an den betreffenden temporären Werkzeugträger übergeben kann.

Eine definierte Anordnung eines temporären Werkzeugträgers lässt sich bei entsprechender Positioniergenauigkeit der für die Bewegung des temporären Werkzeugträgers in die Funktionsstellung verwendeten Einrichtungen, insbesondere entsprechender Antriebe, ohne zusätzliche Hilfsmittel realisieren.

Denkbar ist erfindungsgemäß aber auch die Lösung gemäß Patentanspruch 6.

Zur Gewährleistung einer definierten Anordnung des oder der temporären Werkzeugträger gegenüber dem permanenten Werkzeugträger der stationsfernen Magazineinheit und/oder gegenüber der Werkzeughandlingvorrichtung ist im Falle der Erfindungsbauart nach Patentanspruch 6 eine aktivierbare und deaktivierbare Positioniereinrichtung vorgesehen. Aktiviert ist die Positioniereinrichtung, wenn der betreffende temporäre Werkzeugträger für die Werkzeughandlingvorrichtung verfügbar ist. Ansonsten, beispielsweise zur Überführung des temporären Werkzeugträgers in die Außerfunktionsstellung, ist die Positioniereinrichtung deaktiviert. Für die konstruktive Ausführung der erfindungsgemäßen Positioniereinrichtung bestehen verschiedenartige Möglichkeiten. Beispielsweise kann zwischen dem permanenten Werkzeugträger und einem für die Werkzeughandlingvorrichtung verfügbaren temporären Werkzeugträger eine schaltbare Magnetverbindung vorgesehen sein, mittels derer der temporäre Werkzeugträger für die Dauer seiner Verfügbarkeit für die Werkzeughandlingvorrichtung an den permanenten Werkzeugträger angebunden wird. Ebenfalls denkbar ist eine besondere Führung für den oder die temporären Werkzeugträger, die dann wirksam wird, wenn ein temporärer Werkzeugträger in seine Funktionsstellung einfährt. Eine derartige Führung kann beispielsweise als Kulissenführung ausgebildet sein.

Zur Bewegung des oder der temporären Werkzeugträger der stationsfernen Magazineinheit in die Funktionsstellung und/oder in die Außerfunktionsstellung ist in weiterer Ausgestaltung der Erfindung ein Fördermittel vorgesehen, welches vorzugsweise motorisch angetrieben ist (Patentanspruch 7). Ein derartiges Fördermittel kann insbesondere auch eine Mehrzahl von temporären Werkzeugträgern gemeinschaftlich bewegen. Mit der Überführung eines temporären Werkzeugträgers in die Funktionsstellung kann ein anderer temporärer Werkzeugträger in die Außerfunktionsstellung bewegt werden.

Zweckmäßigerweise ist das angetriebene Fördermittel als endlos umlaufendes Fördermittel ausgeführt (Patentanspruch 8). Als endlos umlaufendes Fördermittel in Frage kommen erfindungsgemäß insbesondere endlos umlaufende Förderketten oder endlos umlaufende Förderriemen (Patentanspruch 9).

Eine große Anzahl an Werkzeugen kann auf engstem Raum vorgehalten werden, wenn die stationsferne Magazineinheit ein Umlaufmagazin umfasst (Patentanspruch 10). Zur funktionssicheren Überführung in die Funktionsstellung und/oder in die Außerfunktionsstellung sind der oder die temporären Werkzeugträger an einer Tragstruktur des Umlaufmagazins geführt. Zur Vermeidung von Unwuchten beim Umlauf von temporären Werkzeugträgern empfiehlt es sich, die Werkzeuge möglichst regelmäßig auf die temporären Werkzeugträger zu verteilen. Zur Führung des oder der temporären Werkzeugträger an der Tragstruktur des Umlaufmagazins können beispielsweise die vorstehend genannten endlos umlaufenden Fördermittel dienen. Alternativ können zum Beispiel auch rotierende Tragscheiben vorgesehen sein, an denen der oder die temporären Werkzeugträger angelenkt sind.

Durch eine besonders kleine Grundfläche zeichnet sich ein Umlaufmagazin der stationsfernen Magazineinheit dann aus, wenn es wenigstens teilweise als Paternoster ausgebildet ist (Patentanspruch 11). An einem endlos umlaufenden und an einer Tragstruktur des Paternosters in vertikaler Bewegungsrichtung geführten Fördermittel können als temporäre Werkzeugträger mehrere Gondeln, insbesondere hängend angebracht sein. Jede der Gondeln kann eine Mehrzahl von Lagerplätzen für Werkzeuge aufweisen. Das umlaufende Fördermittel des Paternosters lässt sich außerhalb des aufzugsartigen Paternosters auch in horizontaler Richtung führen und/oder mehrfach umlenken. Auf diese Art und Weise kann für die stationsferne Magazineinheit ein Umlaufmagazin mit besonders großer Lagerkapazität bereitgestellt werden. Ihre Funktionsstellung fährt eine Gondel vorzugsweise in dem als Paternoster ausgebildeten Teil des Umlaufmagazins an.

Im Falle der maschinellen Anordnung nach Patentanspruch 13 wird das Werkzeugmagazin der Werkzeugmaschine von einem als stationsnahe Magazineinheit beispielsweise vorgesehenen Linearmagazin üblicher Bauart und einer erfindungsgemäß ausgeführten stationsfernen Magazineinheit mit einem permanenten Werkzeugträger und wenigstens einem temporären Werkzeugträger gebildet. Mittels der Werkzeughandlingvorrichtung können Werkzeuge insbesondere zwischen der stationsnahen Magazineinheit, gegebenenfalls dem stationsnahen Linearmagazin, und der stationsfernen Magazineinheit transferiert werden.

Unabhängig von der Bauweise der stationsnahen Magazineinheit besteht erfindungsgemäß die Möglichkeit, dass die Werkzeughandlingvorrichtung an der stationsfernen Magazineinheit wahlweise auf den permanenten Werkzeugträger oder auf den oder die für die Werkzeughandlingvorrichtung gleichfalls zugänglichen temporären Werkzeugträger zugreift. Ist der permanente Werkzeugträger der stationsfernen Magazineinheit näher an der stationsnahen Magazineinheit angeordnet als der oder die für die Werkzeughandlingvorrichtung zugänglichen temporären Werkzeugträger, so empfiehlt es sich im Interesse eines möglichst schnellen Werkzeugtransfers zu der stationsnahen Magazineinheit, die für die Erledigung der jeweils nächsten Bearbeitungsaufgabe benötigten Werkzeuge an dem permanenten Werkzeugträger der stationsfernen Magazineinheit vorzuhalten. Sind außerdem an der Werkzeugmaschine nacheinander Bearbeitungsaufgaben zu erledigen, für die unterschiedliche Werkzeugsätze benötigt werden, so ist die stationsnahe Magazineinheit und mit dieser auch die stationsferne Magazineinheit, von der aus die stationsnahe Magazineinheit mit den benötigten Werkzeugen beschickt wird, ständig nach- bzw. umzurüsten. Da beim Werkzeugtransfer zwischen der stationsnahen Magazineinheit und der stationsfernen Magazineinheit aus den genannten Gründen bevorzugt der permanente Werkzeugträger der stationsfernen Magazineinheit genutzt werden sollte, muss sichergestellt sein, dass an dem permanenten Werkzeugträger der stationsfernen Magazineinheit sämtliche für den nachfolgenden Bearbeitungsprozess benötigten Werkzeuge und/oder eine ausreichende Anzahl freier Lagerplätze für an der stationsnahen Magazineinheit nicht mehr benötigte Werkzeuge vorhanden sind. Eine entsprechende Konfiguration des permanenten Werkzeugträgers der stationsfernen Magazineinheit wird in bevorzugter Ausgestaltung des erfindungsgemäßen Werkzeugverwaltungsverfahrens hauptzeitparallel vorgenommen, d.h. während an der Bearbeitungsstation der Werkzeugmaschine ein Werkstück bearbeitet wird (Patentanspruch 16).

Nachfolgend wird die Erfindung anhand beispielhafter schematischer Darstellungen näher erläutert. Es zeigen:
- Figur 1: eine maschinelle Anordnung zur stanzenden Blechbearbeitung mit einer Stanzmaschine und einem Werkzeugmagazin mit einer stationsfernen Magazineinheit erster Bauart,
- Figur 2: einen Teil der maschinellen Anordnung gemäß Figur 1 in der Ansicht in Richtung des Pfeils II in Figur 1,
- Figur 3: die Stanzmaschine gemäß den Figuren 1 und 2 mit einer stationsfernen Magazineinheit zweiter Bauart,
- Figur 4: einen temporären Werkzeugträger der stationsfernen Magazineinheit gemäß Figur 3 in der Seitenansicht,
- Figur 5: den temporären Werkzeugträger gemäß Figur 4 in der Draufsicht,
- Figur 6: die Stanzmaschine gemäß den Figuren 1 bis 3 mit einer stationsfernen Magazineinheit dritter Bauart,
- Figur 7: die Stanzmaschine gemäß den Figuren 1 bis 3 und 6 mit einer stationsfernen Magazineinheit vierter Bauart,
- Figur 8: die Stanzmaschine gemäß den Figuren 1 bis 3, 6 und 7 mit einer stationsfernen Magazineinheit fünfter Bauart und
- Figur 9: die Stanzmaschine gemäß den Figuren 1 bis 3 und 6 bis 8 mit einer stationsfernen Magazineinheit sechster Bauart.

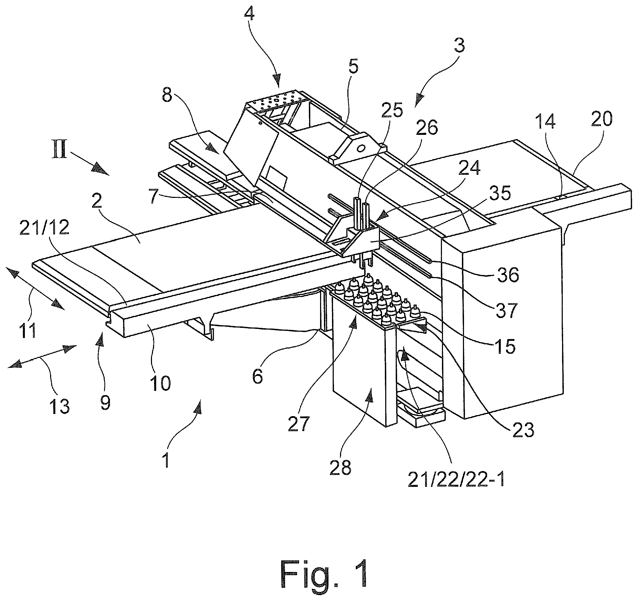

Gemäß den Figuren 1 bis 3 und 5 bis 8 umfasst eine maschinelle Anordnung 1 zum stanzenden Bearbeiten von Blechen 2 als Werkzeugmaschine eine Stanzmaschine 3 herkömmlicher Bauart. Die Stanzmaschine 3 besitzt ein C-förmiges Maschinengestell 4 mit einem oberen Gestellschenkel 5, einem unteren Gestellschenkel 6 und einem zwischen dem oberen Gestellschenkel 5 und dem unteren Gestellschenkel 6 ausgebildeten Schenkelzwischenraum 7. An den freien Enden des oberen Gestellschenkels 5 und des unteren Gestellschenkels 6 befindet sich als Bearbeitungsstation der Stanzmaschine 3 eine herkömmliche Stanzstation 8 mit einer oberen Werkzeugaufnahme an dem oberen Gestellschenkel 5 und einer unteren Werkzeugaufnahme an dem unteren Gestellschenkel 6.

In dem Schenkelzwischenraum 7 des Maschinengestells 4 ist eine gleichfalls herkömmliche Koordinatenführung 9 für Bleche 2 untergebracht. Die Koordinatenführung 9 umfasst eine Querführung 10, die an dem unteren Gestellschenkel 6 in Längsrichtung des Maschinengestells 4 beweglich geführt ist und die motorisch angetrieben in Richtung eines Doppelpfeils 11 verfahren kann.

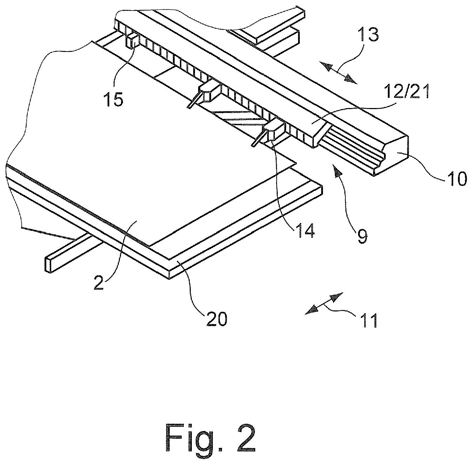

Die Querführung 10 führt ihrerseits eine Querschiene 12, die an der von dem Betrachter der Figuren 1, 3 und 6 bis 9 abliegenden Seite der Querführung 10 vorgesehen und die in Figur 2 zu erkennen ist. Wie üblich ist die Querschiene 12 teilweise in dem Schenkelzwischenraum 7 des Maschinengestells 4 angeordnet und längs der Querführung 10 motorisch angetrieben in Richtung eines Doppelpfeils 13 bewegbar. In herkömmlicher Weise ist die Querschiene 12 mit Spannpratzen 14 zum Fixieren von Blechen 2 und außerdem mit Lagerplätzen für als Werkzeuge für die Blechbearbeitung vorgesehene Stanzwerkzeuge 15 versehen.

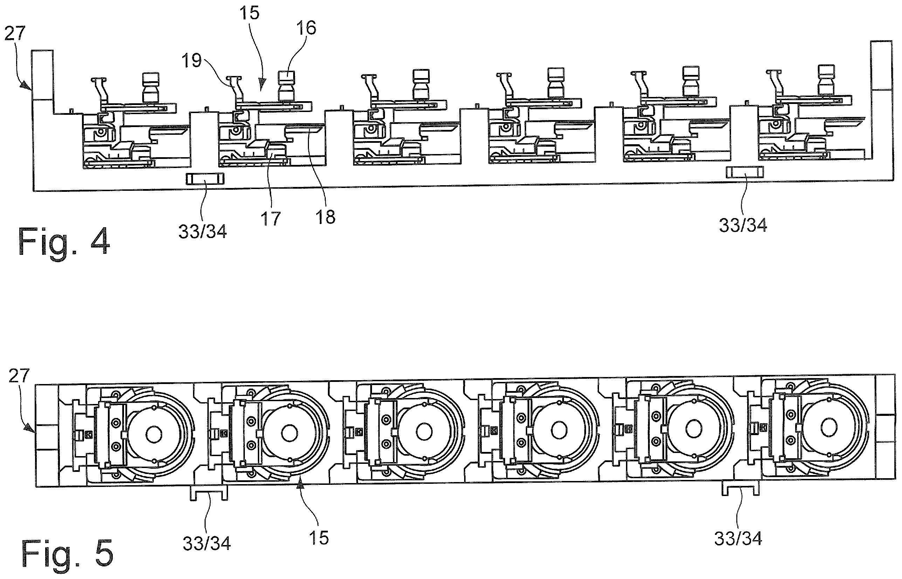

Ausweislich der Figuren 4 und 5 sind die in den übrigen Abbildungen zum Teil stark schematisch dargestellten Stanzwerkzeuge 15 herkömmlicher Bauart und umfassen dementsprechend als Oberwerkzeug einen Stanzstempel 16, als Unterwerkzeug eine Stanzmatrize 17 und außerdem einen Abstreifer 18. Die Einzelteile jedes der Stanzwerkzeuge 15 sind wie üblich in einer Werkzeugkassette 19 untergebracht. Zur Handhabung eines Stanzwerkzeuges 15 wird die betreffende Werkzeugkassette 19 gehandhabt.

Von den Spannpratzen 14 der Koordinatenführung 9 sind in Figur 2 lediglich zwei andeutungsweise zu erkennen. Mittels der Spannpratzen 14 wird ein zu bearbeitendes Blech 2 in gewohnter Weise an der Koordinatenführung 9 fixiert. Aufgrund der Beweglichkeit der Querführung 10 in Richtung des Doppelpfeils 11 und der Querschiene 12 in Richtung des Doppelpfeils 13 kann das durch die Spannpratzen 14 gehaltene Blech 2 mittels der Koordinatenführung 9 in einer durch die Doppelpfeile 11, 13 aufgespannten horizontalen Bewegungsebene bewegt werden. Derartige Bewegungen eines Bleches 2 werden ausgeführt, um das Blech 2 gegenüber der Stanzstation 8 der Stanzmaschine 3 für die Bearbeitung zu positionieren bzw. um das Blech 2 bei der stanzenden Bearbeitung relativ zu der Stanzstation 8 zu bewegen. Während seiner Bewegung ist das Blech 2 auf einem stationären Werkstücktisch 20 der Stanzmaschine 3 gelagert.

Mit den Lagerplätzen für Stanzwerkzeuge 15 bildet die Querschiene 12 der Koordinatenführung 9 eine nahe der Stanzstation 8 angeordnete und daher stationsnahe Magazineinheit eines Werkzeugmagazins 21 der maschinellen Anordnung 1.

Zusätzlich zu der Querschiene 12 (stationsnahe Magazineinheit) umfasst das Werkzeugmagazin 21 der maschinellen Anordnung 1 eine stationsferne Magazineinheit 22. Die stationsferne Magazineinheit 22 ist mit Abstand von der Stanzstation 8 an dem rückwärtigen Ende des Maschinengestells 4 angeordnet.

Die Figuren 1, 3 und 6 bis 9 zeigen die stationsferne Magazineinheit 22 in unterschiedlichen Ausführungen.

Allen Bauarten gemeinsam ist ein als Magazinplattform 23 ausgeführter permanenter Werkzeugträger mit Lagerplätzen für Stanzwerkzeuge 15. Die Magazinplattform 23 ist in den dargestellten Beispielsfällen an einer Längsseite des Maschinengestells 4 mit diesem fest verbunden. Als Alternative wäre auch eine von dem Maschinengestell 4 konstruktiv getrennte Magazinplattform 23 denkbar. Maßgebend für den permanenten Charakter der als Werkzeugträger vorgesehenen Magazinplattform 23 ist der Umstand, dass die Magazinplattform 23 dauerhaft für eine Werkzeughandlingvorrichtung 24, im Einzelnen für einen Werkzeuggreifer 25 und/oder für einen Werkzeuggreifer 26 der Werkzeughandlingvorrichtung 24, zur Entnahme und/oder zur Übergabe von Stanzwerkzeugen 15 zugänglich ist.

Neben der für die Werkzeughandlingvorrichtung 24 dauerhaft zugänglichen Magazinplattform 23 umfasst jede der dargestellten stationsfernen Magazineinheiten 22 einen temporären Werkzeugträger 27.

Auch der temporäre Werkzeugträger 27 weist Lagerplätze für Stanzwerkzeuge 15 auf. Im Gegensatz zu der Magazinplattform 23 ist der temporäre Werkzeugträger 27 nicht dauerhaft sondern vorübergehend für die Werkzeughandlingvorrichtung 24 zur Entnahme und/oder zur Übergabe von Stanzwerkzeugen 15 zugänglich.

Im Falle einer in Figur 1 dargestellten Bauart 22-1 der stationsfernen Magazineinheit 22 wird die vorübergehende Zugänglichkeit des temporären Werkzeugträgers 27 für die Werkzeughandlingvorrichtung 24 dadurch realisiert, dass der temporäre Werkzeugträger 27 an einem mobilen Werkzeugwagen 28 vorgesehen ist. An dem Werkzeugwagen 28 vorgesehene Laufrollen sind in Figur 1 verdeckt angeordnet.

Bei Bedarf wird der Werkzeugwagen 28 mit dem temporären Werkzeugträger 27 in die aus Figur 1 ersichtliche Position bewegt, in welcher der temporäre Werkzeugträger 27 seine Funktionsstellung einnimmt und der Magazinplattform 23 unmittelbar benachbart ist. Nimmt der temporäre Werkzeugträger 27 seine Funktionsstellung ein, so kann die Werkzeughandlingvorrichtung 24 auf die Lagerplätze des temporären Werkzeugträgers 27 bzw. auf dort angeordnete Stanzwerkzeuge 15 zugreifen. In eine Position abseits der Magazinplattform 23 wird der Werkzeugwagen 28 insbesondere zum Nach- bzw. Umrüsten des dann in der Außerfunktionsstellung befindlichen temporären Werkzeugträgers 27 bewegt.

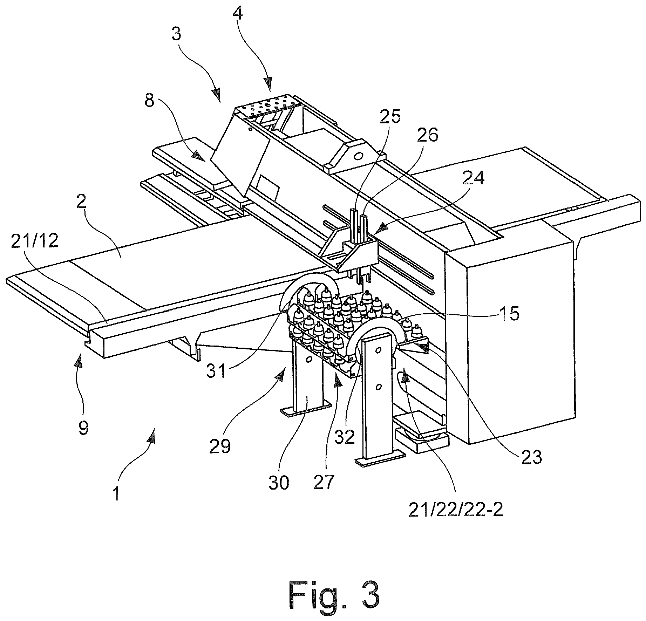

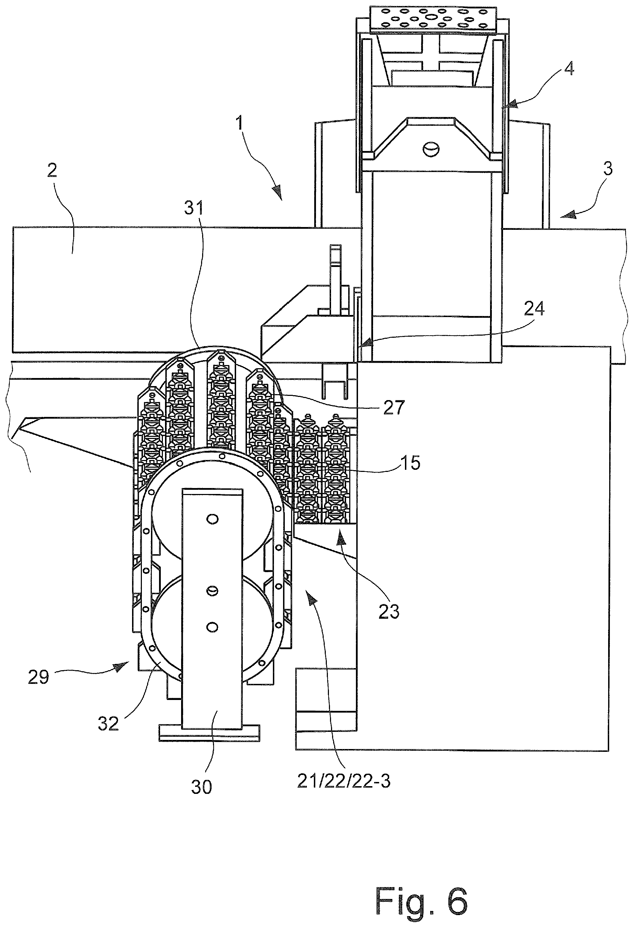

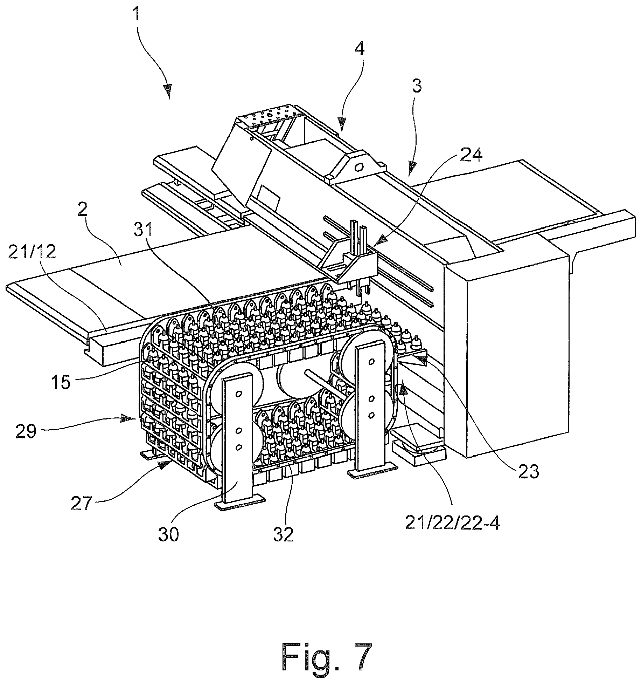

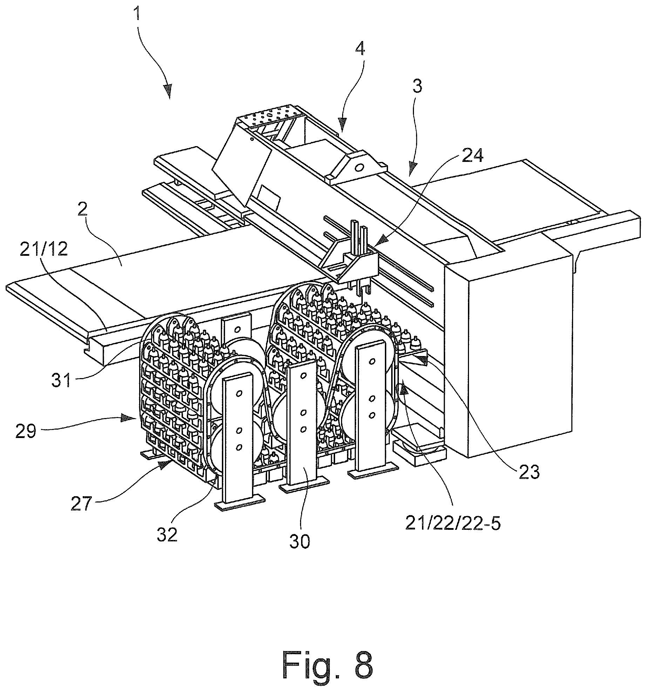

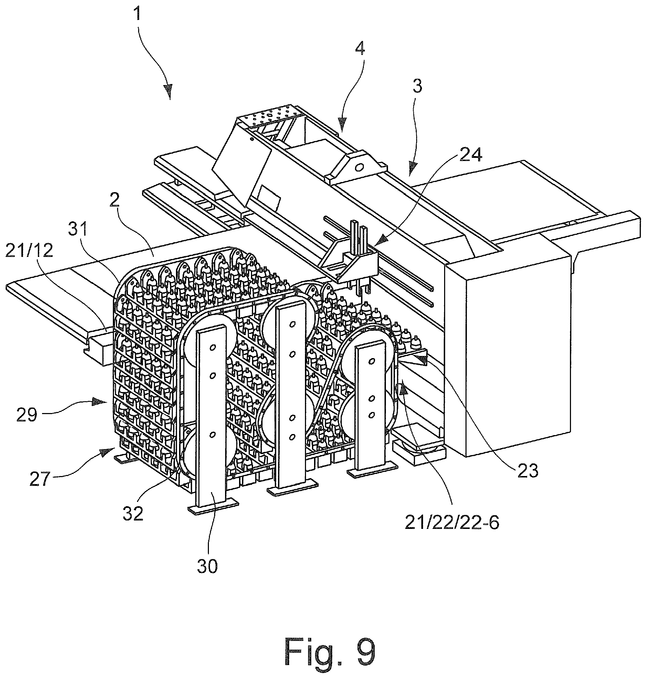

Im Falle der Bauarten 22-2 (Figur 3), 22-3 (Figur 6), 22-4 (Figur 7), 22-5 (Figur 8) und 22-6 (Figur 9) der stationsfernen Magazineinheit 22 sind mehrere temporäre Werkzeugträger 27 vorgesehen. Die temporären Werkzeugträger 27 sind dabei jeweils Bestandteil eines Umlaufmagazins 29, das nach Art eines Paternosters ausgeführt ist. Die verschiedenen Ausführungsformen des Umlaufmagazins 29 unterscheiden sich insbesondere durch ihre Kapazität zur Lagerung von Stanzwerkzeugen 15. Unterschiede in der Lagerkapazität des Werkzeugträgers 27 gemäß Figur 1 bzw. der Umlaufmagazine 29 gemäß den Figuren 3 und 6 bis 9 bedingen unterschiedliche Lagerkapazitäten der verschiedenen Bauarten 22-1, 22-2, 22-3, 22-4, 22-5, 22-6 der stationsfernen Magazineinheit 22.

Jedes der paternosterartigen Umlaufmagazine 29 besitzt eine Tragstruktur 30, an welcher als Fördermittel zwei endlos umlaufende Förderketten 31, 32 geführt sind. Je nach Bauart des Umlaufmagazins 29 sind die Förderketten 31, 32 unterschiedlich oft umgelenkt. Im Falle der in Figur 3 dargestellten Bauart 22-2 der stationsfernen Magazineinheit 22 können anstelle der Förderketten 31, 32 auch Tragscheiben vorgesehen sein, die an der Tragstruktur 30 um horizontale Drehachsen drehbar gelagert sind und an denen die temporären Werkzeugträger 27 bezüglich der Drehachsen der Tragscheiben exzentrisch und um horizontale Schwenkachsen schwenkbar angelenkt sind.

An den Förderketten 31, 32 sind die als Gondeln ausgebildeten temporären Werkzeugträger 27 hängend und um eine horizontale Achse begrenzt schwenkbar gelagert. Die Stanzwerkzeuge 15 sind zur Vermeidung von Unwuchten beim Umlauf der Gondeln auf diese regelmäßig verteilt.

Mittels eines nicht im Einzelnen gezeigten Antriebsmotors werden die Förderketten 31, 32 in ihrer Umlaufrichtung angetrieben. Dadurch wird jeweils ein temporärer Werkzeugträger 27 in eine Funktionsstellung zugestellt, in welcher er der als permanenter Werkzeugträger dienenden Magazinplattform 23 unmittelbar benachbart ist. Die übrigen temporären Werkzeugträger 27 des Umlaufmagazins 29 nehmen gleichzeitig eine Außerfunktionsstellung ein, in welcher sie für die Werkzeughandlingvorrichtung 24 nicht erreichbar sind.

In der Funktionsstellung ist der betreffende temporäre Werkzeugträger 27 gegenüber der Magazinplattform 23 und auch gegenüber der Werkzeughandlingvorrichtung 24 definiert angeordnet. Entsprechendes gilt für die Lagerplätze des in die Funktionsstellung überführten temporären Werkzeugträgers 27 und die an den Lagerplätzen angeordneten Stanzwerkzeuge 15. Wie in den Figuren 4 und 5 zu erkennen ist, sind die Stanzwerkzeuge 15 an den Lagerplätzen des temporären Werkzeugträgers 27 im Wesentlichen spielfrei eingepasst.

Eine definierte gegenseitige räumliche Zuordnung des in die Funktionsstellung bewegten temporären Werkzeugträgers 27 einerseits und der Magazinplattform 23 andererseits wird in den dargestellten Beispielsfällen mittels einer hierfür vorgesehenen Positioniereinrichtung 33 realisiert.

In dem Beispielsfall gemäß den Figuren 4 und 5 umfasst die Positioniereinrichtung 33 Positionieraufnahmen 34 an den temporären Werkzeugträgern 27 und außerdem nicht dargestellte Positioniervorsprünge an der Magazinplattform 23. Fährt der temporäre Werkzeugträger 27 in die Funktionsstellung ein, so wird ein an der Magazinplattform 23 außerdem vorgesehener Elektromagnet der Positioniereinrichtung 33 aktiviert. Durch den Elektromagneten wird der begrenzt schwenkbewegliche temporäre Werkzeugträger 27 an die Magazinplattform 23 herangezogen. Die Positionieraufnahmen 34 an dem temporären Werkzeugträger 27 und die den Positionieraufnahmen 34 zugeordneten Positioniervorsprünge an der Magazinplattform 23 erzeugen dabei einen Formschluss zwischen dem temporären Werkzeugträger 27 und der Magazinplattform 23 und sorgen auf diese Weise für eine Positionierung des temporären Werkzeugträgers 27 mit der gewünschten Anordnung gegenüber der Magazinplattform 23. Damit sind der temporäre Werkzeugträger 27 und dessen Lagerplätze bzw. die an dem temporären Werkzeugträger 27 vorgehaltenen Stanzwerkzeuge 15 gegenüber dem gesamten Maschinengestell 4 und insbesondere auch gegenüber der an dem Maschinengestell 4 vorgesehenen Werkzeughandlingvorrichtung 24 definiert positioniert. Auch im Koordinatensystem einer numerischen Steuerung, die alle wesentlichen Funktionen der maschinellen Anordnung 1 steuert, nehmen damit die Lagerplätze bzw. Stanzwerkzeuge 15 an dem temporären Werkzeugträger 27 eine definierte Position ein.

Die Werkzeughandlingvorrichtung 24 umfasst neben den Werkzeuggreifern 25, 26 einen Transferschlitten 35, der mittels eines nicht dargestellten motorischen Antriebes an maschinengestellfesten Führungsschienen 36, 37 längs des oberen Gestellschenkels 5 des Maschinengestells 4 verfahren kann (Figur1). Die Werkzeuggreifer 25, 26 sind an dem Transferschlitten 35 in Querrichtung des oberen Gestellschenkels 5 beweglich. Außerdem können die Werkzeuggreifer 25, 26 gegenüber dem Transferschlitten 35 in vertikaler Richtung angehoben und abgesenkt werden.

Zur Bearbeitung eines Bleches 2 werden an der oberen Werkzeugaufnahme und an der unteren Werkzeugaufnahme der Stanzstation 8 die Stanzwerkzeuge 15 in gewohnter Weise mittels der Koordinatenführung 9 ein- und ausgewechselt. Auch zu diesem Zweck werden die Beweglichkeit der Querführung 10 in Richtung des Doppelpfeils 11 und die Beweglichkeit der Querschiene 12 in Richtung des Doppelpfeils 13 genutzt, Zum Werkzeugwechsel fährt die Koordinatenführung 9 zunächst mit einem leeren Lagerplatz der Querschiene 12 die Stanzstation 8 an. Das an der Stanzstation 8 eingewechselte Stanzwerkzeug 15 wird anschließend aus der oberen Werkzeugaufnahme und aus der unteren Werkzeugaufnahme der Stanzstation 8 auf den zuvor leeren Lagerplatz der Querschiene 12 übernommen. Danach wird das für den nächsten Bearbeitungsschritt benötigte und an der Querschiene 12 vorgehaltene Stanzwerkzeug 15 durch entsprechendes Verfahren der Koordinatenführung 9 in die obere Werkzeugaufnahme und in die untere Werkzeugaufnahme der Stanzstation 8 eingewechselt.

Das zu bearbeitende Blech 2 ist auch während des Werkzeugwechsels an der Stanzstation 8 an der Koordinatenführung 9 festgelegt und wird über den Werkstücktisch 20 bewegt.

Die an den Lagerplätzen der Querschiene 12 vorgehaltenen Stanzwerkzeuge 15 stammen aus der stationsfernen Magazineinheit 22. Ein für die zu erledigende Bearbeitungsaufgabe benötigter Stanzwerkzeugsatz wird an der Querschiene 12 mittels der Werkzeughandlingvorrichtung 24 zusammengestellt.

Zu diesem Zweck verfährt die Querführung 10 gemeinsam mit der Querschiene 12 in ihre zu dem rückwärtigen Ende des Maschinengestells 4 hin gelegene Endposition. Die für die anstehende Blechbearbeitung benötigten Stanzwerkzeuge 15 werden von der Werkzeughandlingvorrichtung 24 nacheinander an der stationsfernen Magazineinheit 22 aufgenommen und zu der Querschiene 12 transferiert. Bei jedem einzelnen Werkzeugtransfer bewegt sich die Werkzeughandlingvorrichtung 24 längs der maschinengestellfesten Führungsschienen 36, 37 zunächst in eine Werkzeug-Übernahmeposition oberhalb der stationsfernen Magazineinheit 22. Der für den Werkzeugtransfer genutzte Werkzeuggreifer 25, 26 der Werkzeughandlingvorrichtung 24 wird anschließend in vertikaler Richtung so weit abgesenkt, dass er das zu transferierende Stanzwerkzeug 15 erfassen kann. Erforderlichenfalls führt der Werkzeuggreifer 25, 26 zuvor auch noch eine Bewegung in Querrichtung des oberen Gestellschenkels 5 aus. Möglich ist es auch, beide Werkzeuggreifer 25, 26 gleichzeitig und dann für den Transfer von zwei Stanzwerkzeugen 15 einzusetzen.

Beim Transfer eines einzelnen Stanzwerkzeuges 15 wird der Werkzeuggreifer 25, 26 gemeinsam mit dem daran gehaltenen Stanzwerkzeug 15 angehoben und durch Verfahren der Werkzeughandlingvorrichtung 24 längs der Führungsschienen 36, 37 in eine Werkzeug-Übergabeposition oberhalb des für das Stanzwerkzeug 15 vorgesehenen Lagerplatzes an der Querschiene 12 bewegt. Durch erneutes Absenken des Werkzeuggreifers 25, 26 wird das daran gehaltene Stanzwerkzeug 15 an den zugeordneten Lagerplatz der Querschiene 12 übergeben.

Entsprechend vollzieht sich der Transfer der nicht mehr benötigten Stanzwerkzeuge 15 der abgeschlossenen Bearbeitung von der Querschiene 12 zu der stationsfernen Magazineinheit 22.

Während der Verfahrbewegung der Werkzeughandlingvorrichtung 24 längs des oberen Gestellschenkels 5 befindet sich der Werkzeuggreifer 25, 26 mit dem zu transferierenden Stanzwerkzeug 15 stets in seiner gestellnahen Endstellung. Auf diese Art und Weise werden massebedingte Kräfte vermieden, die auftreten würden, wenn der Werkzeuggreifer 25, 26 bei seiner Bewegung längs des Maschinengestells 4 von diesem weiter beabstandet wäre.

Um die Weglänge bzw. die Dauer des Werkzeugtransfers zwischen der stationsfernen Magazineinheit 22 und der stationsnahen Magazineinheit, d.h. der Querschiene 12, zu minimieren, fährt die Werkzeughandlingvorrichtung 24 an der stationsfernen Magazineinheit 22 bevorzugt die Magazinplattform 23 an. Die Magazinplattform 23 muss daher möglichst mit denjenigen Stanzwerkzeugen 15 bestückt sein, aus denen der Stanzwerkzeugsatz für die nächste Blechbearbeitung zusammenzustellen ist bzw. muss freie Lagerplätze in ausreichender Zahl aufweisen, um die bei der vorausgegangenen Blechbearbeitung eingesetzten und nun nicht mehr benötigten Stanzwerkzeuge 15 aufnehmen zu können.

Die entsprechende Konfigurierung der Magazinplattform 23 kann hauptzeitparallel erfolgen, d.h. noch während eine Blechbearbeitung durchgeführt wird.

Die für die darauffolgende Blechbearbeitung benötigten Stanzwerkzeuge 15, die sich nicht bereits auf der Magazinplattform 23 befinden, werden dabei durch den temporären Werkzeugträger 27 bereitgestellt. Der temporäre Werkzeugträger 27 wird zu diesem Zweck in einer abseits der Funktionsstellung gelegenen Außerfunktionsstellung mit den betreffenden Stanzwerkzeugen 15 bestückt und anschließend in die Funktionsstellung nahe der Magazinplattform 23 überführt. Noch während an der Stanzstation 8 ein Blech 2 bearbeitet wird, kann die Werkzeughandlingvorrichtung 24 die für die nächste Blechbearbeitung benötigten und an der Magazinplattform 23 noch nicht verfügbaren Stanzwerkzeuge 15 von dem in der Funktionsstellung angeordneten temporären Werkzeugträger 27 entnehmen und an die Magazinplattform 23 übergeben.

Sind an der Magazinplattform 23 Lagerplätze zur späteren Aufnahme von Stanzwerkzeugen 15 zu räumen, die bei der laufenden Blechbearbeitung eingesetzt werden und die nach Beendigung der laufenden Blechbearbeitung von der Querschiene 12 zu der stationsfernen Magazineinheit 22 zu transferieren sind, so werden Stanzwerkzeuge 15, die für die nachfolgende Blechbearbeitung nicht benötigt werden, mittels der Werkzeughandlingvorrichtung 24 von der Magazinplattform 23 an den in der Funktionsstellung befindlichen temporären Werkzeugträger 27 übergeben, an dem zuvor die für die Übernahme der betreffenden Stanzwerkzeuge 15 benötigten Lagerplätze freigeräumt worden sind.

In der beschriebenen Weise wird sichergestellt, dass schon bei Beendigung einer Blechbearbeitung die für die nachfolgende Blechbearbeitung benötigten Stanzwerkzeuge 15 an der Magazinpiattform 23 verfügbar sind und der an der Querschiene 12 für die abgeschlossene Blechbearbeitung vorgehaltene Stanzwerkzeugsatz kurzfristig gegen den für die nachfolgende Blechbearbeitung benötigten Stanzwerkzeugsatz ausgetauscht werden kann.

Abweichend von der beschriebenen Vorgehensweise besteht auch die Möglichkeit, dass die Werkzeughandlingvorrichtung 24 beim Werkzeugtransfer zwischen der Querschiene 12 und der stationsfernen Magazineinheit 22 unmittelbar auf den in die Funktionsstellung bewegten temporären Werkzeugträger 27 der stationsfernen Magazineinheit 22 zugreift. Stanzwerkzeuge 15 können mittels der Werkzeughandlingvorrichtung 24 an dem temporären Werkzeugträger 27 aufgenommen und unmittelbar zu der Querschiene 12 transferiert werden. Auch ist es denkbar, dass an der Querschiene 12 nicht mehr benötigte Stanzwerkzeuge 15 durch die Werkzeughandlingvorrichtung 24 aufgenommen und ohne Zwischenablage auf der Magazinplattform 23 direkt an den in der Funktionsstellung befindlichen temporären Werkzeugträger 27 übergeben werden.

Aus dem Werkzeugbestand des Werkzeugmagazins 21 der Stanzmaschine 3 beispielsweise verschleißbedingt auszuschleusende Stanzwerkzeuge 15 können nach ihrem Transfer von der Querschiene 12 zu der Magazinplattform 23 insbesondere hauptzeitparallel von der Magazinplattform 23 an einen temporären Werkzeugträger 27 übergeben werden. Dabei besteht die Möglichkeit, einen oder mehrere temporäre Werkzeugträger 27 speziell zum Sammeln auszuschleusender Stanzwerkzeuge 15 bereitzustellen. Nach der Übergabe der auszuschleusenden Stanzwerkzeuge 15 an den betreffenden temporären Werkzeugträger 27 kann dieser aus der Funktionsstellung in die Außerfunktionsstellung überführt werden, in welcher er für einen Bediener zur Entnahme der auszuschleusenden Stanzwerkzeuge 15 zugänglich ist.

## Patentansprüche

1. Werkzeugmagazin für Werkzeuge (15) einer Werkzeugmaschine (3) zum Bearbeiten von Werkstücken, insbesondere von Blechen (2), mit einer stationsnahen Magazineinheit (12) mit einer stationsfernen Magazineinheit (22) sowie mit einer Werkzeughandlingvorrichtung (24),
• wobei die stationsnahe Magazineinheit (12) für Werkzeuge (15) vorgesehen ist, die aus der stationsnahen Magazineinheit (12) in eine Bearbeitungsstation (8) der Werkzeugmaschine (3) eingewechselt und/oder aus der Bearbeitungsstation (8) der Werkzeugmaschine (3) in die stationsnahe Magazineinheit (12) ausgewechselt werden und
• wobei die stationsferne Magazineinheit (22) für Werkzeuge (15) vorgesehen ist, die zum späteren Einwechseln in die Bearbeitungsstation (8) von der stationsfernen Magazineinheit (22) zu der stationsnahen Magazineinheit (12) transferiert werden und/oder die nach dem Auswechseln aus der Bearbeitungsstation (8) von der stationsnahen Magazineinheit (12) zu der stationsfernen Magazineinheit (22) transferiert werden,
**dadurch gekennzeichnet, dass**
die stationsferne Magazineinheit (22) einen permanenten Werkzeugträger (23) sowie einen temporären Werkzeugträger (27) aufweist,
• wobei der permanente Werkzeugträger (23) und der temporäre Werkzeugträger (27) Lagerplätze für Werkzeuge (15) aufweisen, welche von der stationsfernen Magazineinheit (22) zu der stationsnahen Magazineinheit (12) transferiert werden und/oder welche von der stationsnahen Magazineinheit (12) zu der stationsfernen Magazineinheit (22) transferiert werden und
• wobei der permanente Werkzeugträger (23) für die Werkzeughandlingvorrichtung (24) dauerhaft und der temporäre Werkzeugträger (27) für dieselbe Werkzeughandlingvorrichtung (24) vorübergehend und dabei zusätzlich zu dem permanenten Werkzeugträger (23) zugänglich ist zur Entnahme von Werkzeugen (15), welche von der stationsfernen Magazineinheit (22) zu der stationsnahen Magazineinheit (12) transferiert werden und/oder zur Übergabe von Werkzeugen (15), welche von der stationsnahen Magazineinheit (12) zu der stationsfernen Magazineinheit (22) transferiert werden.

2. Werkzeugmagazin nach Anspruch 1, **dadurch gekennzeichnet, dass** die stationsferne Magazineinheit (22) mehrere temporäre Werkzeugträger (27) aufweist und dass die verschiedenen temporären Werkzeugträger (27) wahlweise für die Werkzeughandlingvorrichtung (24) zur Entnahme und/oder zur Übergabe von Werkzeugen (15) zugänglich sind.

3. Werkzeugmagazin nach Anspruch 1 oder Anspruch 2, **dadurch gekennzeichnet, dass** der oder die temporären Werkzeugträger (27) der stationsfernen Magazineinheit (22) in eine Funktionsstellung und in eine Außerfunktionsstellung bewegbar ist oder sind, wobei ein in die Funktionsstellung bewegter temporärer Werkzeugträger (27) für die Werkzeughandlingvorrichtung (24) zur Entnahme und/oder zur Übergabe von Werkzeugen (15) zugänglich ist und wobei ein in die Außerfunktionsstellung bewegter temporärer Werkzeugträger (27) für die Werkzeughandlingvorrichtung (24) nicht zur Entnahme und/oder zur Übergabe von Werkzeugen (15) zugänglich ist.

4. Werkzeugmagazin nach Anspruch 3, **dadurch gekennzeichnet, dass** der oder die temporären Werkzeugträger (27) der stationsfernen Magazineinheit (22) aus der Außerfunktionsstellung in die Funktionsstellung und/oder aus der Funktionsstellung in die Außerfunktionsstellung in vertikaler Richtung bewegbar ist oder sind.

5. Werkzeugmagazin nach Anspruch 3 oder Anspruch 4, **dadurch gekennzeichnet, dass** der oder die temporären Werkzeugträger (27) der stationsfernen Magazineinheit (22) in der Funktionsstellung gegenüber dem permanenten Werkzeugträger (23) und/oder gegenüber der Werkzeughandlingvorrichtung (24) definiert angeordnet ist oder sind.

6. Werkzeugmagazin nach Anspruch 5, **dadurch gekennzeichnet, dass** eine aktivierbare und deaktivierbare Positioniereinrichtung (33) vorgesehen ist, mittels derer der oder die temporären Werkzeugträger (27) der stationsfernen Magazineinheit (22) in der Funktionsstellung gegenüber dem permanenten Werkzeugträger (23) und/oder gegenüber der Werkzeughandlingvorrichtung (24) definiert angeordnet ist oder sind.

7. Werkzeugmagazin nach einem der Ansprüche 3 bis 6, **dadurch gekennzeichnet, dass** für den oder die temporären Werkzeugträger (27) der stationsfernen Magazineinheit (22) ein in der Bewegungsrichtung des oder der temporären Werkzeugträger (27), vorzugsweise motorisch, angetriebenes Fördermittel vorgesehen ist, weiches den oder die temporären Werkzeugträger (27) in die Funktionsstellung und/oder in die Außerfunktionsstellung mitnimmt.

8. Werkzeugmagazin nach Anspruch 7, **dadurch gekennzeichnet, dass** als in der Bewegungsrichtung des oder der temporären Werkzeugträger (27) der stationsfernen Magazineinheit (22) angetriebenes Fördermittel ein endlos umlaufendes Fördermittel vorgesehen ist, mit welchem der oder die temporären Werkzeugträger (27) verbunden sind.

9. Werkzeugmagazin nach Anspruch 8, **dadurch gekennzeichnet, dass** als endlos umlaufendes Fördermittel für den oder die temporären Werkzeugträger (27) der stationsfernen Magazineinheit (22) eine endlos umlaufende Förderkette (31, 32) oder ein endlos umlaufender Förderriemen vorgesehen ist.

10. Werkzeugmagazin nach einem der Ansprüche 7 bis 9, **dadurch gekennzeichnet, dass** die stationsferne Magazineinheit (22) ein Umlaufmagazin (29) umfasst mit wenigstens einem temporären Werkzeugträger (27), der mit einem in seiner Bewegungsrichtung umlaufenden Fördermittel des Umlaufmagazins (29) verbunden und der an einer Tragstruktur (30) des Umlaufmagazins (29) bei der Bewegung in eine Funktionsstellung und in eine Außerfunktionsstellung geführt ist.

11. Werkzeugmagazin nach Anspruch 10, **dadurch gekennzeichnet, dass** das Umlaufmagazin (29) der stationsfernen Magazineinheit (22) wenigstens teilweise als Paternoster ausgebildet ist.

12. Maschinelle Anordnung zum Bearbeiten von Werkstücken, insbesondere von Blechen, mit einer Werkzeugmaschine (3), die eine Bearbeitungsstation (8) aufweist, an welcher Werkzeuge (15) für die Werkstückbearbeitung, insbesondere für die Blechbearbeitung, ein- und auswechselbar sind sowie mit einem Werkzeugmagazin (21) **dadurch gekennzeichnet, dass** das Werkzeugmagazin (21) nach einem der vorhergehenden Ansprüche ausgebildet ist.

13. Maschinelle Anordnung nach Anspruch 12, **dadurch gekennzeichnet,**
• **dass** die Bearbeitungsstation (8) an einem Maschinengestell (4) der Werkzeugmaschine (3) vorgesehen ist, das einen oberen Gestellschenkel (5), einen unteren Gestellschenkel (6) sowie einen zwischen dem oberen Gestellschenkel (5) und dem unteren Gestellschenkel (6) ausgebildeten Schenkelzwischenraum (7) aufweist,
• **dass** die stationsnahe Magazineinheit (12) des Werkzeugmagazins (21) wenigstens teilweise in dem Schenkelzwischenraum (7) des Maschinengestells (4) angeordnet ist,
• **dass** die stationsferne Magazineinheit (22) des Werkzeugmagazins (21) von der stationsnahen Magazineinheit (12) beabstandet außerhalb des Schenkelzwischenraums (7) des Maschinengestells (4) angeordnet ist und
• **dass** die stationsferne Magazineinheit (22) des Werkzeugmagazins (21) als permanenten Werkzeugträger (23) eine Magazinplattform aufweist, relativ zu welcher der oder die temporären Werkzeugträger (27) der stationsfernen Magazineinheit (22) in eine Funktionsstellung und in eine Außerfunktionsstellung bewegbar ist oder sind.

14. Maschinelle Anordnung nach Anspruch 12 oder Anspruch 13, **dadurch gekennzeichnet, dass** als Werkzeughandlingvorrichtung (24), für welche der permanente Werkzeugträger (23) der stationsfernen Magazineinheit (22) dauerhaft und der temporäre Werkzeugträger (27) der stationsfernen Magazineinheit (22) vorübergehend und dabei zusätzlich zu dem permanenten Werkzeugträger (23) zur Entnahme und/oder zur Übergabe von Werkzeugen (15) zugänglich ist, eine Werkzeugtransfervorrichtung vorgesehen ist, mittels derer Werkzeuge (15), die zum späteren Einwechseln in die Bearbeitungsstation (8) der Werkzeugmaschine (3) vorgesehen sind, aus der stationsfernen Magazineinheit (22) zu der stationsnahen Magazineinheit (12) transferierbar sind und/oder mittels derer Werkzeuge (15) nach dem Auswechseln aus der Bearbeitungsstation (8) von der stationsnahen Magazineinheit (12) zu der stationsfernen Magazineinheit (22) transferierbar sind.

15. Verfahren zum Verwalten von Werkzeugen (15) für die Werkstückbearbeitung, insbesondere für die Blechbearbeitung, an der maschinellen Anordnung (1) nach einem der Ansprüche 12 bis 14, **dadurch gekennzeichnet, dass** Werkzeuge (15) zwischen der stationsnahen Magazineinheit (12) und dem permanenten Werkzeugträger (23) der stationsfernen Magazineinheit (22) und/oder zwischen der stationsnahen Magazineinheit (12) und dem temporären Werkzeugträger (27) der stationsfernen Magazineinheit (22) und/oder zwischen dem permanenten Werkzeugträger (23) der stationsfernen Magazineinheit (22) und dem temporären Werkzeugträger (27) der stationsfernen Magazineinheit (22) transferiert werden.

16. Verfahren nach Anspruch 15, **dadurch gekennzeichnet, dass** Werkzeuge (15) zwischen dem permanenten Werkzeugträger (23) der stationsfernen Magazineinheit (22) und dem temporären Werkzeugträger (27) der stationsfernen Magazineinheit (22) transferiert werden, während an der Bearbeitungsstation (8) der Werkzeugmaschine (3) ein Werkstück, insbesondere ein Blech (2), bearbeitet wird.

## Claims

1. Tool magazine for tools (15) of a machine tool (3) for processing workpieces, in particular metal sheets (2), having a magazine unit (12) which is close to the station, a magazine unit (22) which is remote from the station, and a tool handling device (24),
• the magazine unit (12) which is close to the station being provided for tools (15) which are introduced from the magazine unit (12) which is close to the station into a processing station (8) of the machine tool (3) and/or which are transferred from the processing station (8) of the machine tool (3) into the magazine unit (12) which is close to the station and
• the magazine unit (22) which is remote from the station (22) being provided for tools (15) which are transferred from the magazine unit (22) which is remote from the station to the magazine unit (12) which is close to the station for subsequent introduction into the processing station (8) and/or which are transferred from the magazine unit (12) which is close to the station to the magazine unit (22) which is remote from the station after being removed from the processing station (8),
**characterised in that**
the magazine unit (22) which is remote from the station has a permanent tool carrier (23) and a temporary tool carrier (27),
• the permanent tool carrier (23) and the temporary tool carrier (27) having storage locations for tools (15) which are transferred from the magazine unit (22) which is remote from the station to the magazine unit (12) which is close to the station and/or which are transferred from the magazine unit (12) which is close to the station to the magazine unit (22) which is remote from the station, and
• the permanent tool carrier (23) being permanently accessible for the tool handling device (24) and the temporary tool carrier (27) being temporarily accessible for the same tool handling device (24) and in this instance in addition to the permanent tool carrier (23) in order to remove tools (15) which are transferred from the magazine unit (22) which is remote from the station to the magazine unit (12) which is close to the station and/or in order to transfer tools (15) which are transferred from the magazine unit (12) which is close to the station to the magazine unit (22) which is remote from the station.

2. Tool magazine according to claim 1, **characterised in that** the magazine unit (22) remote from the station has a plurality of temporary tool carriers (27) and **in that** the various temporary tool carriers (27) are selectively accessible for the tool handling device (24) for removing and/or transferring tools (15).

3. Tool magazine according to claim 1 or claim 2, **characterised in that** the temporary tool carrier(s) (27) of the magazine unit (22) remote from the station can be moved into an operating position and a non-operating position, a temporary tool carrier (27) which has been moved into the operating position being accessible for the tool handling device (24) in order to remove and/or transfer tools (15) and a temporary tool carrier (27) which has been moved into the non-operating position not being accessible for the tool handling device (24) in order to remove and/or transfer tools (15).

4. Tool magazine according to claim 3, **characterised in that** the temporary tool carrier(s) (27) of the magazine unit (22) remote from the station can be moved in a vertical direction from the non-operating position into the operating position and/or from the operating position into the non-operating position.

5. Tool magazine according to claim 3 or claim 4, **characterised in that** the temporary tool carrier(s) (27) of the magazine unit (22) remote from the station is/are arranged in a defined manner in the operating position with respect to the permanent tool carrier (23) and/or with respect to the tool handling device (24).

6. Tool magazine according to claim 5, **characterised in that** there is provided an activatable and deactivatable positioning device (33), by means of which the temporary tool carrier(s) (27) of the magazine unit (22) remote from the station is/are arranged in a defined manner in the operating position with respect to the permanent tool carrier (23) and/or with respect to the tool handling device (24).

7. Tool magazine according to any one of claims 3 to 6, **characterised in that** there is provided for the temporary tool carrier(s) (27) of the magazine unit (22) remote from the station a conveying means which is driven, preferably in a motorised manner, in the movement direction of the temporary tool carrier(s) (27) and which carries the temporary tool carrier(s) (27) into the operating position and/or into the non-operating position.

8. Tool magazine according to claim 7, **characterised in that** there is provided as the conveying means which is driven in the movement direction of the temporary tool carrier(s) (27) of the magazine unit (22) remote from the station an endlessly rotating conveying means to which the temporary tool carrier(s) (27) are connected.

9. Tool magazine according to claim 8, **characterised in that** there is provided as the endlessly rotating conveying means for the temporary tool carrier(s) (27) of the magazine unit (22) remote from the station an endlessly rotating conveyor chain (31, 32) or an endlessly rotating conveyor belt.

10. Tool magazine according to any one of claims 7 to 9, **characterised in that** the magazine unit (22) remote from the station comprises a rotating magazine (29) having at least one temporary tool carrier (27) which is connected to a conveying means of the rotating magazine (29), which means rotates in the movement direction thereof and which is guided on a carrier structure (30) of the rotating magazine (29) during the movement into an operating position and into a non-operating position.

11. Tool magazine according to claim 10, **characterised in that** the rotating magazine (29) of the magazine unit (22) remote from the station is at least partially constructed as a paternoster.

12. Mechanical arrangement for processing workpieces, in particular metal sheets, having a machine tool (3) which has a processing station (8), on which tools (15) for the workpiece processing operation, in particular for the metal sheet processing operation, can be introduced and removed and having a tool magazine (21), **characterised in that** the tool magazine (21) is constructed in accordance with any one of the preceding claims.

13. Mechanical arrangement according to claim 12, **characterised in that**
• the processing station (8) is provided on a machine frame (4) of the machine tool (3) which has an upper frame leg (5), a lower frame leg (6) and an intermediate leg space (7) which is formed between the upper frame leg (5) and the lower frame leg (6),
• **in that** the magazine unit (12) of the tool magazine (21) close to the station is arranged at least partially in the intermediate leg space (7) of the machine frame (4),
• **in that** the magazine unit (22) of the tool magazine (21) remote from the station is arranged with spacing from the magazine unit (12) close to the station outside the intermediate leg space (7) of the machine frame (4) and
• **in that** the magazine unit (22) of the tool magazine (21) remote from the station has as the permanent tool carrier (23) a magazine platform relative to which the temporary tool carrier(s) (27) of the magazine unit (22) remote from the station can be moved into an operating position and into a non-operating position.

14. Mechanical arrangement according to claim 12 or claim 13, **characterised in that** there is provided as the tool handling device (24), for which the permanent tool carrier (23) of the magazine unit (22) remote from the station is permanently accessible and the temporary tool carrier (27) of the magazine unit (22) remote from the station is temporarily accessible, and in this instance in addition to the permanent tool carrier (23) in order to remove and/or to transfer tools (15), a tool transfer device by means of which tools (15) which are provided for subsequent introduction into the processing station (8) of the machine tool (3) can be transferred from the magazine unit (22) remote from the station to the magazine unit (12) close to the station and/or by means of which tools (15) can be transferred from the magazine unit (12) close to the station to the magazine unit (22) remote from the station after being removed from the processing station (8).

15. Method for administering tools (15) for workpiece processing, in particular for metal sheet processing, on the mechanical arrangement (1) according to any one of claims 12 to 14, **characterised in that** tools are transferred between the magazine unit (12) close to the station and the permanent tool carrier (23) of the magazine unit (22) remote from the station and/or between the magazine unit (12) close to the station and the temporary tool carrier (27) of the magazine unit (22) remote from the station and/or between the permanent tool carrier (23) of the magazine unit (22) remote from the station and the temporary tool carrier (27) of the magazine unit (22) remote from the station.

16. Method according to claim 15, **characterised in that** tools (15) are transferred between the permanent tool carrier (23) of the magazine unit (22) remote from the station and the temporary tool carrier (27) of the magazine unit (22) remote from the station, whilst a workpiece, in particular a metal sheet (2) is processed on the processing station (8) of the machine tool (3).

## Revendications

1. Magasin d'outils pour des outils (15) d'une machine-outil (3) destinée à l'usinage de pièces, en particulier de tôles (2), avec une unité de magasin (12) proche du poste, avec une unité de magasin (22) éloignée du poste et avec un dispositif (24) de manipulation d'outils,
- sachant que l'unité de magasin (12) proche du poste est prévue pour des outils (15) qui sont transférés de l'unité de magasin (12) proche du poste à un poste d'usinage (8) de la machine-outil (3) et/ou du poste d'usinage (8) de la machine-outil (3) à l'unité de magasin (12) proche du poste,
- et sachant que l'unité de magasin (22) éloignée du poste est prévue pour des outils qui, en vue d'un transfert ultérieur au poste d'usinage (8), sont transférés de l'unité de magasin (22) éloignée du poste à l'unité de magasin (12) proche du poste, et/ou qui, après le transfert depuis le poste d'usinage (8), sont transférés de l'unité de magasin (12) proche du poste à l'unité de magasin (22) éloignée du poste,
**caractérisé en ce que** l'unité de magasin (22) éloignée du poste présente un porte-outils permanent (23) et un porte-outils temporaire (27),
- sachant que le porte-outils permanent (23) et le porte-outils temporaire (27) présentent des emplacements de stockage pour des outils (15) qui sont transférés de l'unité de magasin (22) éloignée du poste à l'unité de magasin (12) proche du poste, et/ou qui sont transférés de l'unité de magasin (12) proche du poste à l'unité de magasin (22) éloignée du poste,
- et sachant que le dispositif (24) de manipulation d'outils peut accéder permanentement au porte-outils permanent (23) et le même dispositif (24) de manipulation d'outils temporairement au porte-outils temporaire (27), et ce faisant en plus du porte-outils permanent (23), afin de prélever des outils (15) qui sont transférés de l'unité de magasin (22) éloignée du poste à l'unité de magasin (12) proche du poste, et/ou afin de remettre des outils (15) qui sont transférés de l'unité de magasin (12) proche du poste à l'unité de magasin (22) éloignée du poste.

2. Magasin d'outils selon la revendication 1, **caractérisé en ce que** l'unité de magasin (22) éloignée du poste présente plusieurs porte-outils temporaires (27), et **en ce que** le dispositif (24) de manipulation d'outils peut accéder sélectivement aux différents porte-outils temporaires (27) afin de prélever et/ou de remettre des outils (15).

3. Magasin d'outils selon la revendication 1 ou 2, **caractérisé en ce que** le ou les porte-outils temporaires (27) de l'unité de magasin (22) éloignée du poste peut ou peuvent être déplacés dans une position fonctionnelle et dans une position non fonctionnelle, sachant que le dispositif (24) de manipulation d'outils peut accéder, afin de prélever et/ou de remettre des outils (15), à un porte-outils temporaire (27) déplacé dans la position fonctionnelle, et sachant que le dispositif (24) de manipulation d'outils ne peut pas accéder, afin de prélever et/ou de remettre des outils (15), à un porte-outils temporaire (27) déplacé dans la position non fonctionnelle.

4. Magasin d'outils selon la revendication 3, **caractérisé en ce que** le ou les porte-outils temporaires (27) de l'unité de magasin (22) éloignée du poste est ou peuvent être déplacés en direction verticale de la position non fonctionnelle dans la position fonctionnelle et/ou de la position fonctionnelle dans la position non fonctionnelle.

5. Magasin d'outils selon la revendication 3 ou 4, **caractérisé en ce que** le ou les porte-outils temporaires (27) de l'unité de magasin (22) éloignée du poste est ou sont disposés dans la position fonctionnelle d'une manière définie par rapport au porte-outils permanent (23) et/ou par rapport au dispositif (24) de manipulation d'outils.

6. Magasin d'outils selon la revendication 5, **caractérisé en ce qu'**il est prévu un dispositif de positionnement (33) pouvant être activé et désactivé, au moyen duquel le ou les porte-outils temporaires (27) de l'unité de magasin (22) éloignée du poste est ou sont disposés dans la position fonctionnelle d'une manière définie par rapport au porte-outils permanent (23) et/ou par rapport au dispositif (24) de manipulation d'outils.

7. Magasin d'outils selon l'une des revendications 3 à 6, **caractérisé en ce qu'**il est prévu, pour le ou les porte-outils temporaires (27) de l'unité de magasin (22) éloignée du poste, un moyen de transport entraîné, de préférence de façon motorisée, dans la direction de déplacement du ou des porte-outils temporaires (27), moyen qui entraîne avec lui le ou les porte-outils temporaires (27) dans la position fonctionnelle et/ou dans la position non fonctionnelle.

8. Magasin d'outils selon la revendication 7, **caractérisé en ce que**, comme moyen de transport entraîné dans la direction de déplacement du ou des porte-outils temporaires (27) de l'unité de magasin (22) éloignée du poste, il est prévu un moyen de transport circulant sans fin auquel sont reliés le ou les porte-outils temporaires (27).

9. Magasin d'outils selon la revendication 8, **caractérisé en ce que**, comme moyen de transport circulant sans fin pour le ou les porte-outils temporaires (27) de l'unité de magasin (22) éloignée du poste, il est prévu une chaîne transporteuse (31, 32) circulant sans fin ou une courroie transporteuse circulant sans fin.

10. Magasin d'outils selon l'une des revendications 7 à 9, **caractérisé en ce que** l'unité de magasin (22) éloignée du poste comprend un magasin circulant (29) avec au moins un porte-outils temporaire (27), qui est relié à un moyen de transport, circulant dans sa direction de déplacement, du magasin circulant (29) et qui est guidé sur une structure porteuse (30) du magasin circulant (29) lors du déplacement dans une position fonctionnelle et dans une position non fonctionnelle.

11. Magasin d'outils selon la revendication 10, **caractérisé en ce que** le magasin circulant (29) de l'unité de magasin (22) éloignée du poste est réalisé au moins partiellement sous forme de paternoster.

12. Agencement mécanique pour l'usinage de pièces, en particulier de tôles, avec une machine-outil (3) qui présente un poste d'usinage (8) où peuvent être transférés des outils (15) pour l'usinage de pièces, en particulier pour l'usinage de tôles, et avec un magasin d'outils (21), **caractérisé en ce que** le magasin d'outils (21) est configuré selon l'une des revendications précédentes.

13. Agencement mécanique selon la revendication 12, **caractérisé**
- **en ce que** le poste d'usinage (8) est prévu sur un bâti de machine (4) de la machine-outil (3) qui présente une branche supérieure de bâti (5), une branche inférieure de bâti (6) et un espace entre branches (7) configuré entre la branche supérieure de bâti (5) et la branche inférieure de bâti (6),
- **en ce que** l'unité de magasin (12) proche du poste du magasin d'outils (21) est disposée au moins partiellement dans l'espace entre branches (7) du bâti de machine (4),
- **en ce que** l'unité de magasin (22) éloignée du poste du magasin d'outils (21) est disposée à distance de l'unité de magasin (12) proche du poste en dehors de l'espace entre branches (7) du bâti de machine (4),
- et **en ce que** l'unité de magasin (22) éloignée du poste du magasin d'outils (21) présente comme porte-outils permanent (23) une plate-forme de magasin par rapport à laquelle le ou les porte-outils temporaires (27) de l'unité de magasin (22) éloignée du poste peut ou peuvent être déplacés dans une position fonctionnelle et dans une position non fonctionnelle.

14. Agencement mécanique selon la revendication 12 ou la revendication 13, **caractérisé en ce que**, comme dispositif (24) de manipulation d'outils pouvant accéder, afin de prélever et/ou de remettre des outils (15), permanentement au porte-outils permanent (23) de l'unité de magasin (22) éloignée du poste et temporairement au porte-outils temporaire (27) de l'unité de magasin (22) éloignée du poste et ce faisant en plus du porte-outils permanent (23), il est prévu un dispositif de transfert d'outils au moyen duquel des outils (15), qui sont prévus pour le transfert ultérieur au poste d'usinage (8) de la machine-outil (3), peuvent être transférés de l'unité de magasin (22) éloignée du poste à l'unité de magasin (12) proche du poste, et/ou au moyen duquel des outils (15) peuvent, après le transfert depuis le poste d'usinage (8), être transférés de l'unité de magasin (12) proche du poste à l'unité de magasin (22) éloignée du poste.

15. Procédé de gestion d'outils (15) pour l'usinage de pièces, en particulier pour l'usinage de tôles, sur l'agencement mécanique (1) selon l'une des revendications 12 à 14, **caractérisé en ce que** des outils (15) sont transférés entre l'unité de magasin (12) proche du poste et le porte-outils permanent (23) de l'unité de magasin (22) éloignée du poste, et/ou entre l'unité de magasin (12) proche du poste et le porte-outils temporaire (27) de l'unité de magasin (22) éloignée du poste, et/ou entre le porte-outils permanent (23) de l'unité de magasin (22) éloignée du poste et le porte-outils temporaire (27) de l'unité de magasin (22) éloignée du poste.

16. Procédé selon la revendication 15, **caractérisé en ce que** des outils (15) sont transférés entre le porte-outils permanent (23) de l'unité de magasin (22) éloignée du poste et le porte-outils temporaire (27) de l'unité de magasin (22) éloignée du poste, pendant qu'une pièce, en particulier une tôle (2), est usinée au poste d'usinage (8) de la machine-outil (3).
